# EUROPEAN PATENT APPLICATION

(11) **EP 3 041 281 A1**
(43) Date of publication of application: **06.07.2016**
(21) Application number: 14307210.6
(22) Date of filing: 30.12.2014
(51) Int. Cl.: H04W 12/08, H04L 29/06, H04W 12/04, H04W 12/06, H04W 84/18

(54) **A method for accessing a shared wireless device using a client wireless communications device, and devices for the same .**

(71) Applicant: GEMALTO SA, 92190 Meudon (FR)
(72) Inventor: Gullberg, Peter, 92190 MEUDON (FR); Josefsson, Johan, 92190 Meudon (FR); Simonsson, Johan, 92190 MEUDON (FR)
(74) Representative: Cassagne, Philippe M.J.

(57) **Abstract**

A method for accessing a shared wireless device (4) using a client wireless communications device (2), said method comprising steps of:
- requesting a connection from an application running on said client device;
- exchanging cryptographic keys (102) between the client and shared devices, in response to said request, in order to authenticate the client device with the shared device;
- allowing said client device (104), once authenticated, to access said shared device by recording an identifier (ID) of said client device into a database;
- creating a communication link (108) between the client and shared devices, only if the identifier is present in the database;
in which said application is able to access said database, in order to modify the contents of said database.

## Description

The present invention relates to a method for accessing a shared peripheral wireless communication device using a client wireless communications device. The invention also relates to a communication system comprising a shared wireless device and a client wireless communications device, and to an information storage medium which contains instructions for executing said method.

Mobile communication devices are known, such as Smartphone, which allow users of said devices to use and exchange data with a shared peripheral wireless device, such as a printer or a chip card reader, through a wireless data connection. One such example of such a wireless connection is the Bluetooth protocol.

The current version of the Bluetooth standard (version 4.1) describes a known method to access a shared device using a client device. The devices are first "paired", typically at the request of a user, in order to confirm the identity of both devices. Identification data of the client device is then recorded into a white list of the shared device. Once a client device is recorded into said white list, it can then be allowed to establish a data link ("bonding") with the shared device. Once said bonding is effective, the client device may use the shared device. This bonding is permitted only with client devices which are recorded in the white list. If bonding with a client device is terminated, it can be resumed later with this same client device without having to pair anew the devices, as long as the client device is recorded in the white list.

A drawback of this known method is that it lacks usability and reliability, especially when multiple clients attempt to access the same shared device, or in case of failure of the bonding between client and shared devices. This results in degraded usability for the user of said devices.

It is therefore an object of the present invention to provide a method for accessing a shared wireless device using a client wireless communications device, each having a wireless communication interface, said method comprising steps of:
- requesting a connection from a client application running on said client device;
- exchanging cryptographic keys between a client wireless communications device and a shared peripheral device, in response to said request, in order to authenticate the client device with the shared device;
- allowing said client device, once authenticated, to access the shared device, this step comprising the recording of an entry containing an identifier of said client device into a database of devices allowed by the shared device, said database being stored by said shared device;
- creating a secure communication link, over said communication interface, between the client device and the shared device, said link being created only if the entry containing the identifier of said client device is present into the white list;
and in which said client application is able to access said database, through said secure communication link, in order to modify the contents of said database.

In another mode of realisation, the database contains a plurality of entries corresponding to different devices that had been previously allowed to access said shared device, and the step of allowing said client device further comprises the automatic deletion of an entry of the database, selected according a predefined criterion, the entry containing the identifier of said client device being recorded in place of said deleted entry.

In another mode of realisation, the entry automatically deleted according to the predefined criterion is the one corresponding to the least frequently used entry of the database.

In another mode of realisation, the method further comprises a step of selectively removing from said database, using said client application of the allowed client device, an entry corresponding to the identifier of another device that has been previously allowed to access said shared device.

In another mode of realisation, the method further comprises a step of associating a name tag to the recorded identifier in said database using said user client application of the allowed client device.

In another mode of realisation, the wireless communication interface is a Bluetooth communication interface.

In another mode of realisation, said shared wireless device is a chip card reader.

In another mode of realisation, said client wireless device is a mobile computing device such as a computer or a Smartphone or a tablet.

The invention also relates to an information storage medium, which comprises instructions for implementing the method for accessing a shared wireless device using a client wireless communications device according to the invention when said instructions are executed by an electronic data processor.

The invention also relates to a communication system comprising:
- a shared wireless device, having a wireless communication interface;
- a client wireless communications device, having a wireless communication interface and able to run a client application;
said client device and shared device being able to exchange cryptographic keys with each other, in response to a request from the client application, in order to authenticate the client device with the shared device;
the shared device being further able to:
o allow said client device, once authenticated, to access the shared device by recording an entry containing an identifier of said client device into a database of devices allowed by the shared device, said database being stored by said shared device;
o create a secure communication link, over said communication interface, between the client device and the shared device, said link being created only if the entry containing the identifier of said client device is present into the database;
in which that said client application is able to access said database, through said communication link, in order to modify the contents of said database.

By giving said application on the allowed client device an access to the database, or white list, of the shared device, the user of said client device may read and/or modify the contents of said white list, and thus directly resolve a problem resulting from white list management on the shared device's side.

For example, in case of a failed bonding between said devices, the user may directly resolve the situation himself, simply by appropriately altering the white list. Thus, usability of said devices is greatly enhanced.

In another situation, if several other client devices are already connected to the shared device, the user may remove them from the white list to terminate those connections if they are deemed undesirable, e.g. for privacy or security reasons.

The advantage of the present invention will become apparent from the following description, given solely as a non limiting example and with reference to the accompanying drawings, in which:
- Figure 1 is a diagrammatic simplified representation of a communications system containing a shared wireless communications device and a client wireless communications device;
- Figure 2 is a simplified block diagram of a client application and an operating system of the client wireless communications device of Fig. 1;
- Figure 3 is a flowchart of a method for accessing the shared wireless device of Fig. 1 using the client wireless communications device of Fig. 1.

In this description, the features and functions that are well known to those skilled in the art are not described in detail.

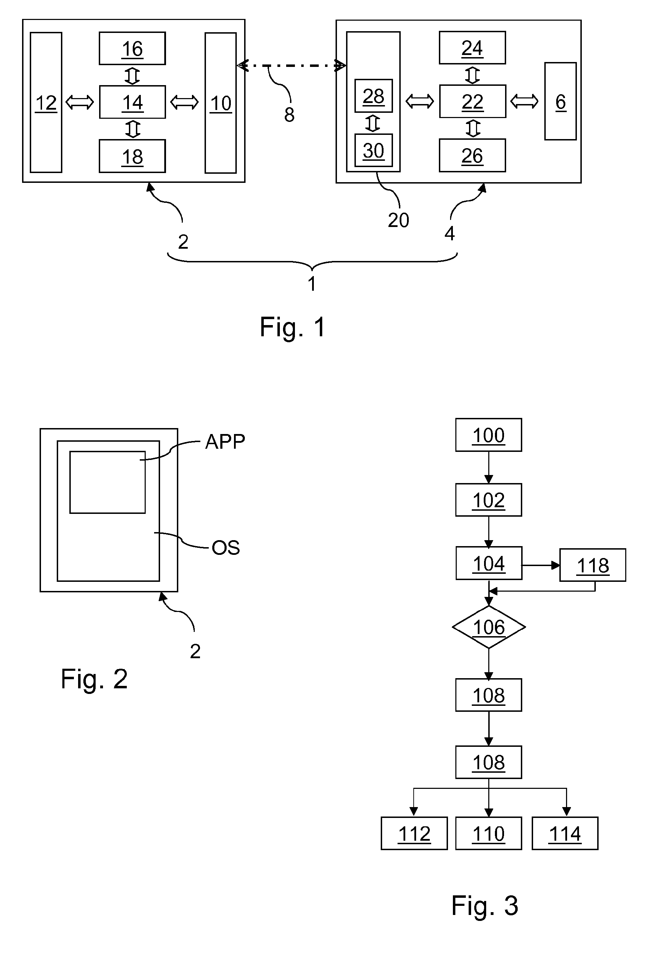

Figure 1 is a schematic representation of an exemplary communications system 1 including a client wireless communication device 2 and a shared wireless peripheral communication device 4. In this setup, devices 2 and 4 are able to exchange data with each other wirelessly, so that device 2 can gain access to and use a shared resource 6 of said device 4, thanks to a secure (e.g. encrypted) communication link such as a wireless data connection 8.

To this end, device 2 advantageously comprises:
- a wireless communication interface 10,
- a user interface 12,
- an electronic data processing unit 14,
- an information storage medium 16, and
- an electrical power source 18.

In this example, device 2 is a mobile communication device such as a Smartphone.

Interface 10 is able to receive and transmit data wirelessly with another wireless device. In this embodiment, wireless interface 10 is a Bluetooth compliant communication interface.

In this description, "Bluetooth" refers to the Bluetooth® wireless short-range radio communication standard developed by the Bluetooth Special Interest Group. As is known, Bluetooth allows short-range exchange of data between computing devices using UHF (ultra high frequency) radio waves, typically in the ISM (instrument, scientific and medical) frequency band.

For example, interface 10 comprises a Bluetooth driver module and a Bluetooth-compliant radio antenna piloted by said driver module. This driver module is programmed to execute steps of establishing and managing a data connection with another Bluetooth-compliant wireless device, as will be described in greater detail in what follows. In this embodiment, said interface 10 includes a unique identifier ID, which distinguishes device 2 from all other client devices. Identifier ID may for example be a string of alphanumerical characters encoded in digital form. For example, identifier ID is hard-coded into said driver module.

Here, interface 12 includes a data input device and an optical display (not shown in detail). Interface 12 allows a user to control and provide instructions to device 2, for example through a graphical user interface. Said data input device may include a keyboard or a touch-screen interface.

Unit 14 automatically processes data to and from interfaces 10, 12 and medium 16. For example, unit 14 contains a programmable microprocessor. Unit 14, interface 10, 12 and medium 16 are connected to each other through an internal data bus (not drawn) and exchange data through this bus.

Storage medium 16 stores instructions for implementing a method for connecting to device 4, such as the method of Fig. 3, when said instructions are executed by unit 14. For example, medium 16 comprises a computer-readable non-volatile memory such as Flash or EEPROM.

Electrical source 18 powers device 2. For example, source 18 is an electrical rechargeable battery.

Figure 2 is a simplified block diagram illustrating further the functioning of device 2. Device 2 is configured to run an operating system OS and an application APP.

As is known, the operating system OS is software programmed to manage hardware resources of device 2 when it is running. For example, the operating system OS is stored in medium 16 as instructions able to be executed by an electronic data processor. Said operating system OS is run by system 2 by executing said instructions on unit 14 with for example the aid of other hardware resources of device 2 such as a random access memory (not shown).

Here, application APP is a software application. Said application APP is able to switch between a running state, in which it is executed by operating system OS, and an offline state, where it is not executed by operating system OS and resides in medium 16.

When it is running, said application APP is able to perform predetermined functions and especially to request access to hardware features of device 2, such as interfaces 10 and 12, through the operating system OS. Said application APP is thus able to receive input from a user of device 2 on interface 12.

For example, said application APP is programmed to request and manage the establishment of communication link 8 with device 4, at the request of a user of device 2.

This device 4 may be shared, that is to say that its shared resource 6 can be used remotely by different wireless client devices, either simultaneously or one at a time.

Device 4 advantageously comprises:
- a wireless communication interface 20,
- an electronic data processing unit 22, for example identical to unit 14,
- an information storage medium 24, for example identical to medium 16,
- an electrical power source 26, for example identical to source 18, and
- shared resource 6.

In this example, device 4 is a peripheral security device that includes a chip card reader. In that case, the resource 6 is the card reader. Said resource 6 can be accessed remotely by client 2 so that an application running on client 2 can, in this case, use said card reader, for example to provide a digital signature in a secure online transaction.

In this example, the application APP is used by a user of device 2 to perform a secure online transaction on a communication network, such as internet. The user of device 2 uses said card reader to read a chip card, in order to provide a digital signature required to complete said secure online transaction on device 2.

Interface 20 is for example identical to and has the same role as interface 10, except that it further comprises a security module 28 and a database 30 of devices authenticated by device 4.

Module 28 is programmed to grant access to the shared resource 6 only to client devices which have appropriate security credentials. To do so, module 28 maintains in database 30 a list of entries which identify client devices that have been authenticated and are thus allowed to access resource 6. Thus, database 30 is a list of all the client devices that are allowed to establish and maintain secure connections with the device 4. If a client device is not listed in database 30, then it may not establish nor maintain a secure connection with device 4. Database 30 is also known as a "white list". In what follows, the names "database 30" and "white list 30" will mean to designate the same object.

For example, white list 30 is a data structure, recorded in a memory element of module 28 and able to contain a plurality of entries, each corresponding to a client device. Each entry contains an identifier of the corresponding client device, analogous to identifier ID.

Unit 22 and power source 26 perform the same functions as, respectively, unit 14 and source 18 with respect to device 4 and will therefore not be described in further detail. Storage medium 24 stores instructions for implementing a method for connecting to device 4, such as the method of Fig. 3, when said instructions are executed by unit 22. Unit 22, interface 20, medium 24 and resource 6 are connected to each other through an internal data bus (not drawn) and exchange data through this bus.

An exemplary method for accessing resource 6 of device 4 using device 2 is described according to the flowchart of Figure 3 and with the aid of Figures 1 and 2.

During a step 100, the device 2 initiates a data connection to device 4, in order to access the resource 6. Here, data connection 8 is a Bluetooth connection link.

This step 100 is for example executed in response to a connection request inputted by a user of application APP running on device 2, using interface 12. Here, said request is generated by application APP and sent to the driver module of interface 10.

Typically, a Bluetooth connection is established in two sequential stages. Firstly, both devices 2 and 4 must authenticate each other before a secure data connection can be established. This first stage is usually known as "pairing".

Then, once devices 2 and 4 are authenticated (i.e. paired), then secure communication link 8 is created. This second stage is usually known as "bonding". Once communication link 8 is established (i.e. both devices are bonded), devices 2 and 4 can exchange data over communication link 8, until that link 8 is terminated. Communication link 8 may be restored at a later time, for example at the request of a user of device 2, as long as devices 2 and 4 are still paired.

During this first stage, devices 2 and 4 may communicate each other wirelessly thanks to interfaces 10 and 20. At this stage, device 2 cannot yet access resource 6.

This stage of pairing comprises, to this end, a step 102 in which devices 2 and 4 exchange cryptographic keys through their respective interfaces 10 and 20, so that device 4 can authenticate device 2 and grant it access to shared resource 6.

The precise details of the implementation of said key exchange and authentication method can for example be found in the Bluetooth standard version 4.0 or version 4.1, available from the Bluetooth Special Interest Group.

Once the exchange of cryptographic keys between devices 2 and 4 is completed, and once that said device 2 is said to be authenticated by device 4, then the stage of pairing further comprises a step 104 in which device 4 grants the permission to device 2 to access shared resource 6.

Here, this is performed by having the module 28 to write an entry associated to device 2 into white list 30. This entry for example contains the identifier ID of device 2 and said cryptographic key associated to this device, for example encoded in binary form. Device 2 is then said to be 'paired' with device 4.

If, alternatively, device 2 has not been deemed authenticated by device 4 at the end of step 102, then step 104 is not performed and the entry containing identifier ID is not recorded into white list 30. Therefore, device 2 is then not paired with device 4.

Once this pairing stage is completed, then, during the stage of 'bonding', the secure data communication link 8 is created. This creation occurs only if device 2 has been previously paired with device 4. If both devices are not paired, then pairing will have to be performed before bonding can be allowed to occur. If connection 8 is terminated (for example because the user of device 2 request so), then it can be resumed later, as long as device 2 is still paired with device 4. The bonding stage will be executed, without having to execute again the pairing stage.

Thus, the bonding stage comprises a step 106, in which device 4 checks whether device 2 has been previously authenticated. Here, module 28 checks whether an entry containing identifier ID is stored in white list 30. If the identifier ID is not stored in white list 30, then the communication 8 is not established.

If said identifier ID is present, then the connection 8 is allowed to occur. Thus, during a step 108, the connection 8 is created and devices 2 and 4 are said to be bonded. The device 2 can then access resource 6 through the connection 8.

The application APP is able to access white list 30, once device 2 has been authenticated during step 104.

For example, white list 30 is mirrored in device 2, for example in application APP, so that a user of device 2 can read and/or modify its contents. Such modifications are then forwarded to device 4 in order to update white list 30.

For example, during a step 110, the contents of white list 30 are modified, by application APP, over communication link 8, for example by a user of device 2.

This feature is especially advantageous in the event of a malfunction during the bonding stage. For example, the connection 8 could not be established properly even though the devices 2 and 6 were properly paired with each other (and thus an entry associated to device 2 is present in white list 30). Usually, the failed connection cannot be restored from device 2. In order to resolve the situation, the failed connection must be reset by removing the entry from white list 30, manually, using an operating system of device 4. Then, pairing must take place anew before establishing connection 8. This causes unnecessary inconvenience to the user of device 2. Worse, this user may not even have access to the operating system of device 4 and thus may not reset the failed connection.

Here, on the contrary, the connection is managed at the application level. The user of device 2 can modify the white list 30 through the application APP running on device 2. The user of device 2 is thus given the ability to modify white list 30 to reset the failed connection by removing directly the incriminated entry. A connectivity-related issue may thus be resolved easily, directly from device 2, without having to access the operating system of device 4. The usability of device 2 is thus greatly enhanced.

The overall security of the system is preserved, since this feature is accessible only from an authenticated client device.

Another advantage is that, by allowing white list 30 to be managed remotely from application APP, it is not necessary for device 4 to feature a user interface, such as a display or a keyboard, for this specific purpose. This simplifies the conception and reduces the cost of device 4.

A further advantage is that the user may see in real time whether other client devices are currently bonded with 4 and likely to use resource 6. This feature can be of great interest in applications where the use of resource 6 may prompt security and/or privacy concerns.

This feature of accessing white list 30 from device 2 is also advantageous to resolve situations arising from the fact that multiple other client devices can also have access to resource device 4.

Here, multiple client devices have been previously paired with and bonded to device 4. In that case, white list 30 also contains a plurality of entries each corresponding to another client device that has been previously paired with device 4. The expression "another client device" designates here a third-party client device that is not device 2.

In a further embodiment, during a step 112, a name tag is associated, in white list 30, with the recorded entry corresponding to device 2. This name tag is for example a string of ASCII characters chosen by a user of device 2. Here, the user inputs said name tag through the interface 8 of device 2. Said name tag is then conveyed to device 4 through communication 8 link and is then stored into the corresponding entry of white list 30.

When white list 30 is displayed on interface 12, device 2 appears under the chosen name tag. Reading and browsing white list 30 over interface 12 is thus made easier for the user. This is especially useful in situations where many identifiers of various devices are listed in white list 30, as they are usually not displayed in a human-readable form, and users would otherwise have some difficulty to recognize which client device is associated with a given identifier.

Alternatively, during a step 114, an entry corresponding to another client device is selectively removed from white list 30, using interface 12 of device 2.

For example, a user of device 2 selects, through interface 12, an entry of white list 30 corresponding to a currently bonded client device whose connection link with device 4 must be terminated, and sends a command to terminate it to device 4 through interface 10. This command is then received by device 4 and forwarded to module 28 which deletes the corresponding entry from white list 30. Once said entry is removed from white list 30, module 28 terminates the secure connection between device 4 and that client device.

This way, said user may know if other devices are connected and decide to revoke the permission to access resource 6, for example because of security and/or privacy concerns.

In another mode of realisation, the entries corresponding to all other currently bonded client devices are automatically removed from white list 30 at the moment the connection link 8 is established between devices 2 and 6. This means that active connection links between device 4 and other client devices are terminated when connection 8 is established with device 2. This feature is useful for applications which require that device 4 may maintain an active connection link with only one client device at a time.

In another mode of realisation, during the step 104, the operation of writing the entry of device 2 into the white list 30 is preceded by a test to check whether the white list 30 contains enough free memory space to receive said entry. If there is enough space, then said entry is written into the white list 30. However, if there is not enough space, for example because the white list 30 is filled with entries associated to other client devices, then, during a step 118, one of said entries is automatically deleted from the white list 30, according to a predetermined criterion, and the entry of device 2 is written in its place in white list 30.

In an embodiment of this operation, said predetermined criterion is chosen as follows: the entry to be removed is the one that is the least frequently used. The least frequently used entry is said to be the one which corresponds to the client device which, among all client devices corresponding to the entries of white list 30, has not bonded with device 4 for the longest time.

For example, each entry in the white list 30 further comprises a timestamp indicating the last time at which the corresponding device has been successfully bonded to device 4. Thus, during step 118, the timestamps are automatically read and said entries are sorted from the most recently used to the oldest used, the latter being then automatically deleted.

One advantage of this embodiment is that the entries corresponding to the client devices that are the most frequently used with device 4 are not deleted during this operation 118, thus dispensing their respective users from having to set up again a pairing routine the next time they want to connect their device to device 4. A user of a device that connects to device 4 only very infrequently would then be less impacted than one that connects more often.

Many other modes of realisation are possible.

Device 2 may be different. For example, it can be a computer, or a tablet, or a personal assistant.

Device 4 may also be different. For example, it can be a pair of headphones or a loudspeaker unit, or a printer, or a data storage system, or a home or vehicular entertainment system.

The precise implementation of the pairing or the bonding stages may be different.

Database 30 may be different. It may be stored in a memory of device 4 distinct from module 28 or interface 20.

Step 112 and 114 may be omitted. In fact, only one of steps 110, 112 and 114 may be executed, as well, alternatively, as any combination thereof.

The name tag may be chosen differently, or may be encoded differently (e.g. as an image or a pictogram). It may be pre-recorded in device 2, thus dispensing users from having to input it every time they bond to device 4.

During step 114, entries corresponding to client devices that are paired but not currently bonded can also be removed.

Step 118 may be different. A different criterion can be used to choose which identifier is to be deleted. For example, the oldest identifier is deleted, irrespective of its usage frequency. Said criterion can be chosen by a user of device 2.

Alternatively, the identifier of a client device, such as identifier ID, may be different. For example, it is not stored or hardcoded into interface 10. Instead, it is defined at the application level. For example, it is coded in application APP. Thus, if several other applications besides application APP are installed on device 2, they may each have their own identifier. If any of said applications requests the opening of connection link 8 with the device 4, then the method for establishing said connection will be the same as if it was another client device. Thus, said identifier ID does not allow distinguishing device 2 from all other client devices. It serves only to distinguish application APP from other devices.

## Claims

1. A method for accessing a shared wireless device (4) using a client wireless communications device (2), each having a wireless communication interface (10, 20), said method comprising steps of :
- requesting a connection from an client application (APP) running on said client device (2);
- exchanging cryptographic keys (102) between a client wireless communications device and a shared peripheral device, in response to said request, in order to authenticate the client device with the shared device;
- allowing said client device (104), once authenticated, to access the shared device, this step comprising the recording of an entry containing an identifier (ID) of said client device into a database (30) of devices allowed by the shared device, said database being stored by said shared device (4);
- creating (108) a secure communication link (8), over said communication interface, between the client device and the shared device, said link being created only if the entry containing the identifier of said client device is present into the white list;
**characterized in that** said client application is able to access said database (30), through said secure communication link (8), in order to modify the contents of said database.

2. The method of claim 1, in which :
- the database contains a plurality of entries corresponding to different devices that had been previously allowed to access said shared device, and
- the step of allowing said client device further comprises the automatic deletion (118) of an entry of the database, selected according a predefined criterion, the entry containing the identifier of said client device being recorded in place of said deleted entry.

3. The method of claim 2, in which the entry automatically deleted (118) according to the predefined criterion is the one corresponding to the least frequently used entry of the database.

4. The method of claim 1, further comprising a step of selectively removing (114) from said database, using said client application of the allowed client device, an entry corresponding to the identifier of another device that has been previously allowed to access said shared device.

5. The method of claim 1, further comprising a step of associating a name tag (112) to the recorded identifier in said database (30) using said user client application of the allowed client device.

6. The method of claim 1, in which the wireless communication interface (10, 20) is a Bluetooth communication interface.

7. The method of claim 1, in which said shared wireless device (4) is a chip card reader.

8. The method of claim 1, in which said client wireless device (2) is a mobile computing device such as a computer or a smartphone or a tablet.

9. An information storage medium (16, 24), which comprises instructions for implementing the method for accessing a shared wireless device using a client wireless communications device of claim 1 when said instructions are executed by an electronic data processor.

10. A communication system comprising:
- a shared wireless device (4), having a wireless communication interface;
- a client wireless communications device (2), having a wireless communication interface and able to run a client application (APP);
said client device and shared device being able to exchange cryptographic keys with each other, in response to a request from the client application, in order to authenticate the client device with the shared device;
the shared device being further able to:
o allow said client device, once authenticated, to access the shared device by recording an entry containing an identifier (ID) of said client device (2) into a database (30) of devices allowed by the shared device, said database being stored by said shared device (4);
o create a secure communication link (8), over said communication interface, between the client device and the shared device, said link being created only if the entry containing the identifier of said client device is present into the database;
**characterized in that** said client application is able to access said database, through said communication link (8), in order to modify the contents of said database.
